# EUROPEAN PATENT APPLICATION

(11) **EP 4 492 220 A1**
(43) Date of publication of application: **15.01.2025**
(21) Application number: 23778001.0
(22) Date of filing: 23.03.2023
(51) Int. Cl.: G06F 8/34

(54) **INFORMATION DISPLAY METHOD AND APPARATUS, AND ELECTRONIC DEVICE AND STORAGE MEDIUM**

(30) Priority: 28.03.2022 CN 202210315268
(71) Applicant: Beijing Youzhuju Network Technology Co., Ltd., Beijing 101299 (CN)
(72) Inventor: CAO, Yu, Beijing 100028 (CN); LIU, Fangqi, Beijing 100028 (CN); BAI, Haihui, Beijing 100028 (CN)
(74) Representative: Dentons UK and Middle East LLP
(86) International application number: PCT/CN2023/083401
(87) International publication number: WO 2023/185632

(57) **Abstract**

Disclosed in the embodiments of the present disclosure are an information display method and apparatus, and an electronic device and a storage medium. The method comprises: in response to a trigger operation for a target component, displaying first prompt information in a target interface, wherein the first prompt information is used for indicating candidate placement areas in the target interface that meet a condition for placing the target component therein; and if it is detected that the target component enters the target interface, displaying second prompt information in the target interface, wherein the second prompt information is used for indicating a target placement area for placing the target component therein, and the candidate placement areas comprise the target placement area.

## Description

### CROSS-REFERENCE TO RELATED APPLICATIONS

This application claims priority to and is based on a Chinese application with an application number 202210315268.9 and a filing date of March 28, 2022, the aforementioned application is hereby incorporated by reference in its entirety.

### FIELD OF THE INVENTION

The present disclosure relates to the field of information technology, and in particular to an information display method, apparatus, electronic device and storage medium.

### BACKGROUND

With the rapid development of network technology and terminal technology, online shopping has become a relatively mature shopping mode. When shopping online, users usually browse online stores to find their desired target items. Therefore, online stores need to be pre-edited and maintained routinely to present the items in the store to users.

### DISCLOSURE OF THE INVENTION

Embodiments of the present disclosure provide an information display method, apparatus, electronic device, and storage medium.

Embodiments of the present disclosure provide an information display method, the method comprising:
in response to a trigger operation on a target component, displaying first prompt information on a target interface, wherein the first prompt information is used to indicate a candidate placement area on the target interface that meets a condition for placing the target component;
if it is detected that the target component enters the target interface, displaying second prompt information on the target interface, wherein the second prompt information is used to indicate a target placement area for placing the target component, and the target placement area is included in the candidate placement area.

Embodiments of the present disclosure also provide an information display apparatus, including:
a first display module, configured to, in response to a trigger operation on a target component, display first prompt information on a target interface, wherein the first prompt information is used to indicate a candidate placement area on the target interface that meets a condition for placing the target component;
a second display module configured to, if it is detected that the target component enters the target interface, display second prompt information on the target interface, wherein the second prompt information is used to indicate a target placement area for placing the target component, and the target placement area is included in the candidate placement area.

Embodiments of the present disclosure also provide an electronic device, the electronic device comprising:
one or more processors;
a storage device for storing one or more programs;
wherein the one or more programs, when executed by the one or more processors, cause the one or more processors to implement the information display method as described above.

Embodiments of the present disclosure further provide a computer-readable storage medium on which a computer program is stored, wherein the computer program, when executed by a processor, causes implementation of the information display method described above.

Embodiments of the present disclosure further provide a computer program product, which may include a computer program or instructions, wherein the computer program or instructions, when executed by a processor, causes implementation of the information display method described above.

The information display method provided by embodiments of the present disclosure displays first prompt information on a target interface in response to a trigger operation on a target component, wherein the first prompt information is used to indicate a candidate placement area on the target interface that meets a condition for placing the target component, so that once the target component is triggered, the user can be indicated the candidate placement area where the target component can be located, therefore, the user can clearly understand where to place the target component, for guiding the user's next interactive operation; when it is detected that the target component enters the target interface, further display second prompt information on the target interface, wherein the second prompt information is used to indicate a target placement area for placing the target component, and the target placement area is included in the candidate placement area, that is, when the target component enters the target interface, a target placement area is automatically determined from multiple candidate placement areas and prompted to the user.

### DESCRIPTION OF THE DRAWINGS

The above and other features, advantages and aspects of the embodiments of the present disclosure will become more apparent with reference to the following detailed description in conjunction with the accompanying drawings. Throughout the drawings, the same or similar reference numerals refer to the same or similar elements. It is to be understood that the drawings are schematic, and that objects and elements are not necessarily drawn to scale.
FIG. 1 is a flowchart of an information display method in an embodiment of the present disclosure;
FIG. 2 is a schematic diagram of an interface in an embodiment of the present disclosure;
FIG. 3 is a schematic diagram of an interface in an embodiment of the present disclosure;
FIG. 4 is a schematic diagram of an interface in an embodiment of the present disclosure;
FIG. 5 is a schematic diagram of an interface in an embodiment of the present disclosure;
FIG. 6 is a schematic diagram of an interface in an embodiment of the present disclosure;
FIG. 7 is a schematic diagram of an interface in an embodiment of the present disclosure;
FIG. 8 is a schematic diagram of a component area in an embodiment of the present disclosure;
FIG. 9 is a schematic diagram of a component area in an embodiment of the present disclosure;
FIG. 10 is a structural schematic diagram of an information display apparatus in an embodiment of the present disclosure;
FIG. 11 is a structural schematic diagram of an electronic device in an embodiment of the present disclosure.

### DETAILED DESCRIPTION OF PREFERRED EMBODIMENTS

Embodiments of the present disclosure will be described in more detail below with reference to the accompanying drawings. Although certain embodiments of the present disclosure are shown in the drawings, it should be understood that the present disclosure can be implemented in various forms and should not be construed as limited to the embodiments set forth herein, instead, these embodiments are provided to provide a more thorough and complete understanding of the present disclosure. It should be understood that the drawings and embodiments of the present disclosure are only used for illustrative purposes, but not used to limit the protection scope of the present disclosure.

It should be understood that the various steps described in the method implementation of the present disclosure may be executed in different orders and/or in parallel. Furthermore, method implementations may include additional steps and/or omit illustrated steps. The scope of the present disclosure is not limited in this regard.

The term "include" and variations thereof as used herein are open inclusions, i.e., "including but not limited to". The term "based on" means "based at least in part on". The term "one embodiment" means "at least one embodiment"; the term "another embodiment" means "at least one additional embodiment"; the term "some embodiments" means "at least some embodiments". Relevant definitions of other terms will be given in the following description.

It should be noted that the concepts such as "first" and "second" mentioned in the present disclosure are only used to distinguish different apparatuses, modules or units, but not used to limit the order or interdependence of the functions performed by these apparatuses, modules or units.

It should be noted that the modifications of "one" and "plurality" mentioned in the present disclosure are illustrative rather than restrictive, and those skilled in the art should understand that it should be understood as "one or more", unless otherwise clearly indicated in the context.

The names of the messages or information exchanged between multiple apparatuses in the embodiments of the present disclosure are only used for illustrative purposes, but not used to limit the scope of these messages or information.

Currently, when editing a store, the user is required a high level of operation, resulting in low efficiency in editing the store and poor user experience.

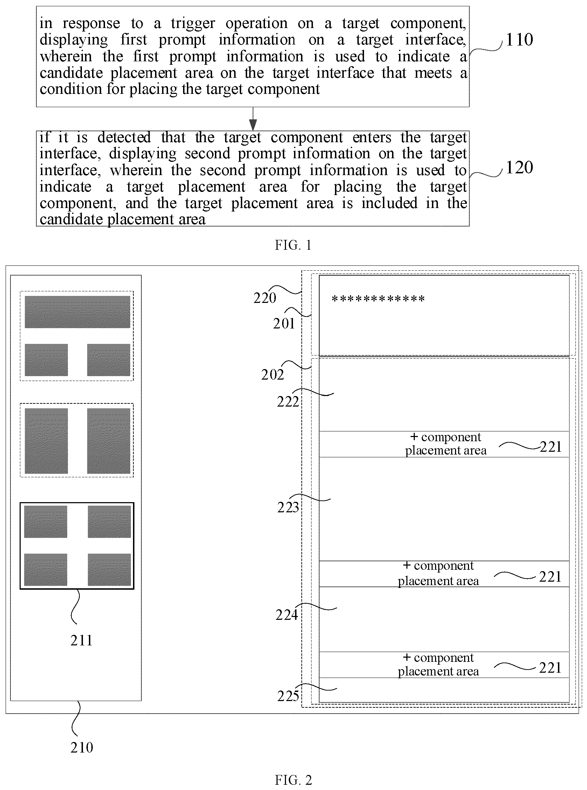

FIG. 1 is a flowchart of an information display method in an embodiment of the present disclosure. This embodiment is applicable to a situation where editing, such as layout, etc., may be performed on an interface based on components, the method can be executed by an information display apparatus, which can be implemented in software and/or hardware. The apparatus can be configured in an electronic device, such as a terminal, specifically including but not limited to smart phone, PDA, tablet computer, wearable device with display screen, desktop computer, laptop computer, all-in-one computer, smart home device, etc.

As shown in FIG. 1, the method specifically comprises the following steps:
Step 110: in response to a trigger operation on a target component, displaying first prompt information on a target interface, wherein the first prompt information is used to indicate a candidate placement area on the target interface that meets a condition for placing the target component.

Among them, the target interface may include a page editing interface, such as an editing interface for a product presentation page of an online store; the target interface can also include a page non-editing interface. In other words, in addition to an editable interface, the target interface can also include a non-editable interface, such as a store introduction interface for an online store, which is used to display the name of the store and other information). Exemplarily, referring to an interface schematic diagram as shown in FIG. 2, the target interface 220 includes a page editing interface 201 and a page non-editing interface 202. The target component is a component used to edit the contents presented by the page editing interface, for example, the target component is a component used to present product pictures or a component for presenting coupons, etc. Among them, the component used to present product pictures can be a component that presents only one picture, a component that presents two pictures at the same time, or a component that displays three pictures at the same time, etc. The size of the display area for each picture in the component that displays multiple pictures at the same time can be the same or different, so as to provide users with candidate components with richer styles and meet personalized editing requirements of different users.

Among them, the trigger operation on the target component is an operation for confirming that the target component is a control object. Optionally, the trigger operation on the target component can be an operation of selecting the target component by single clicking the mouse, or an operation of selecting the target component by using a stylus or a touch part, or an operation of controlling the movement of the target component (for example, the operation of dragging the target component, which can be dragging the target component by holding down the mouse pointer, or dragging the target component by using a stylus or a touch part).

When a trigger operation on a target component is detected, a first prompt information is displayed on the target interface, and the first prompt information is used to indicate a candidate placement area in the target interface that meets a condition for placing the target component, wherein the candidate placement area refers to an area where the target component can be placed, so that once the target component is triggered, a user can be indicated the candidate placement area where the target component can be placed, therefore, the user can clearly know where the target component can be placed, which can guide the user's next interactive operation, the editing efficiency of the target interface can be improved and the requirements for the user's operating level can be reduced. Optionally, the candidate placement area may be at a preset position in the target interface, or a certain position in the target interface determined based on personalization of the target component. For example, the candidate placement area is at a position between boundaries of existing component areas in the target interface, that is, the target component can be placed between different component areas. If the target interface does not include any existing component area, the top, bottom, left or right of the target interface may be determined as a candidate placement area. It is also possible to determine component areas with a style similar to the target component based on parameters of the target component (such as length and width) and parameters of existing components in the target interface, and determine positions between such component areas as candidate placement areas.

The first prompt information may be directly displayed in the candidate placement area; or the first prompt information may be displayed in a non-candidate placement area, but the first prompt information can be associated with the candidate placement area, for example, by pointing from the first prompt information to the candidate placement area through an arrow or other icon. If the first prompt information is directly displayed in the candidate placement area, only the first prompt information about a specific text can be displayed in the candidate placement area, and the color of the candidate placement area can also be changed while displaying the first prompt information of the specific text, so as to achieve the purpose of being eye-catching, provide users with stronger prompts, and enhance the operating experience. It shall be understood that the first prompt information may also be expressed by simply changing the color of the candidate placement area.

Generally, in a scenario where a target interface is edited based on components, a plurality of candidate components are displayed through the component interface, the plurality of candidate components generally have different display styles to facilitate a user to select a target component therefrom. That is, the component interface and the target interface are two independent interfaces, and during editing the target interface based on components, the target component selected from the component interface needs to be moved to the target interface. Exemplarily, referring to the interface diagram shown in FIG. 2, the interface diagram includes a component interface 210 and a target interface 220. The component interface 210 displays candidate components of various styles thereon, and the candidate components are used to edit the presentation contents of the target interface 220. The user can select a specific candidate component from the component interface 210 as the target component according to his/her needs, and drag the target component to the target interface 220 to edit the contents displayed in the target interface 220 through the target component.

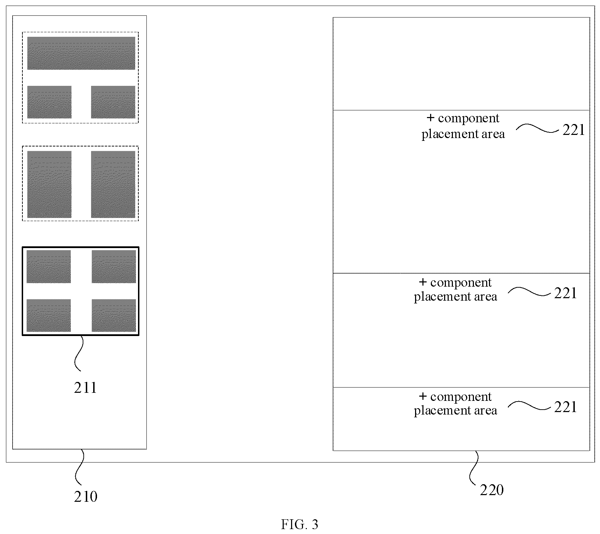

Optionally, in response to a trigger operation on a target component, displaying a first prompt information on a target interface, may include: in response to a selection operation on the target component, displaying the first prompt message on a target interface. That is, when the target component is selected, the first prompt information is displayed on the target interface. For example, the user selects the target component 211 in the component interface 210, when the user selects the target component 211, the first prompt information 221 is displayed in the target interface 220 to indicate the candidate placement area in the target interface 220 that meets the condition for placing the target component. Further, as shown in FIG. 2, the first prompt information 221 may be directly displayed in the candidate placement area where the target component 211 may be placed, the first prompt information 221 may specifically be "+component placement area". Optionally, as shown in the interface schematic diagram of FIG. 3, while the first prompt information 221 is directly displayed in the candidate placement area where the target component 211 can be placed, the color of the candidate placement area can be controlled to be distinguished from the colors of other non-candidate placement areas, for example, the color of the candidate placement area is displayed as green, and the colors of other non-candidate placement areas are displayed as gray, etc., so as to more clearly highlight the candidate placement area, so that the user can promptly identify which areas are candidate placement areas, thereby achieving the purpose of improving the user's operating experience.

In some other optional implementations, the first prompt information 221 is not directly displayed in the candidate placement area, but is displayed in other areas, and can be associated to the candidate placement area through an indication icon, so as to achieve the purpose of indicating the candidate placement area. For example, the first prompt information 221 can specifically be "the candidate placement area can be an area indicated by an arrow", and the candidate placement area can be pointed to from the first prompt information 221 through the arrow.

Among them, the candidate placement area can be an area between the boundaries of the existing component areas in the target interface 220, for example, the target interface shown in Figure 2 includes existing component areas 222, 223, 224 and 225, the area between the boundary of component area 222 and the boundary of component area 223 can be used as a candidate placement area to display the first prompt information 221; the area between the boundary of component area 223 and the boundary of component area 224 can be used as a candidate placement area to display the first prompt information 221; the area between the boundary of component area 224 and the boundary of component area 225 can be used as a candidate placement area to display the first prompt information 221.

Optionally, if there is no existing component area in the target interface, an area set in the target interface can serve as a candidate placement area, for example, the top of an editable interface in the target interface may be used as the candidate placement area.

Optionally, in response to a trigger operation on a target component, displaying first prompt information on the target interface, may include: displaying the first prompt information on the target interface, when it is detected that the target component is selected and the target component starts to move. In other words, as long as the target component moves, the first prompt information is displayed on the target interface.

Furthermore, in response to a trigger operation on a target component, displaying a first prompt message on a target interface, may include: in response to a trigger operation on the target component, controlling the movement of the target component; if the target component moves out of the component interface and does not enter the target interface, displaying a first prompt message in the candidate placement area in the target interface; wherein the trigger operation is input by a preset trigger object, and the trigger object includes one of a mouse pointer, a stylus, or a touch part, that is, a user can select a target component or drag the target component through a mouse pointer, a stylus, or a touch part (such as a finger) to apply a trigger operation on the target component.

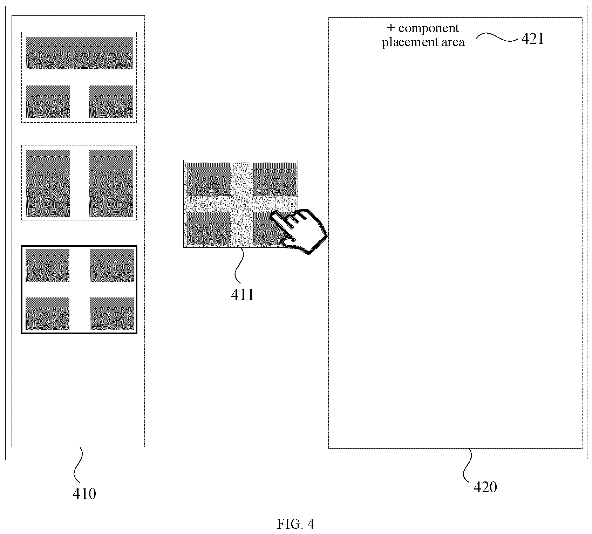

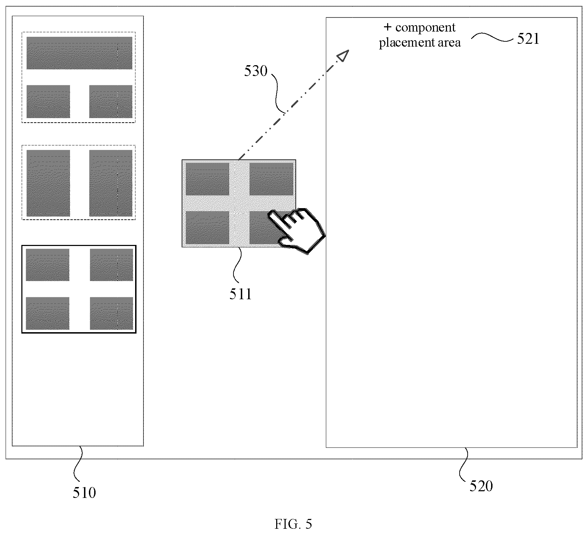

In one implementation, when the target component is selected, the first prompt information may not be displayed immediately, instead, the first prompt information may be displayed in the candidate placement area in the target interface when the target component is moved out of the component interface and does not enter the target interface. As shown in an interface schematic diagram of FIG. 4, when a target component 411 is between a component interface 410 and a target interface 420, a first prompt message 421 may be displayed on the target interface 420. Further, referring to an interface schematic diagram as shown in FIG. 5, when it is detected that the target component 511 is moved out of the component interface 510 but still not enter the target interface 520, a guidance icon 530 is displayed pointing from the target component 510 to the candidate placement area, to guide the user in the operation direction, thereby reducing the operation difficulty and improving the operating efficiency and operating experience.

Step 120: if it is detected that the target component enters the target interface, displaying second prompt information on the target interface, wherein the second prompt information is used to indicate a target placement area for placing the target component, and the target placement area is included in the candidate placement area.

Among them, the second prompt information may be directly displayed in the target placement area; or the second prompt information may be displayed in a non-target placement area, but the second prompt information can be associated with the target placement area, for example, by pointing from the second prompt information to the target placement area through an arrow or other icon. If the second prompt information is directly displayed in the target placement area, only the second prompt information about a specific text can be displayed in the target placement area, and the color of the target placement area can also be changed while displaying the second prompt information of the specific text, so as to achieve the purpose of being eye-catching, provide users with stronger prompts, and enhance the operating experience. It shall be understood that the second prompt information may also be expressed by simply changing the color of the target placement area. If the first prompt information is also expressed by simply changing the color of the candidate placement area, then the color used to express the first prompt information and the color used to express the second prompt information can be distinguished to facilitate distinguishing between the candidate placement area and the target placement area.

That is, when the target component enters the target interface, a target placement area can be automatically determined from multiple candidate placement areas and prompted to the user, further reducing the operation difficulty and improving the operating efficiency and operating experience. Specifically, the user's operation intention can be determined based on the user's operation behavior, for example, based on the position of the target component dragged by the user in the target interface, a candidate placement area closest to the current target component can be determined as the target placement area, and the target placement area can be prompted to the user. For example, if the position of the target component dragged by the user in the target interface belongs to an existing component area in the target interface, the candidate placement area closest to the component area can be determined as the target placement area; if the position of the target component dragged by the user in the target interface happens to belong to a candidate placement area, the candidate placement area is determined as the target placement area.

Exemplarily, if it is detected that the target component enters the target interface, displaying the second prompt information on the target interface includes:
If it is detected that the target component is located in a component area in the target interface, determining a target position of the trigger object in the component area; determining the target placement area from the candidate placement areas based on the target position; and replacing the first prompt information displayed in the target placement area with the second prompt information.

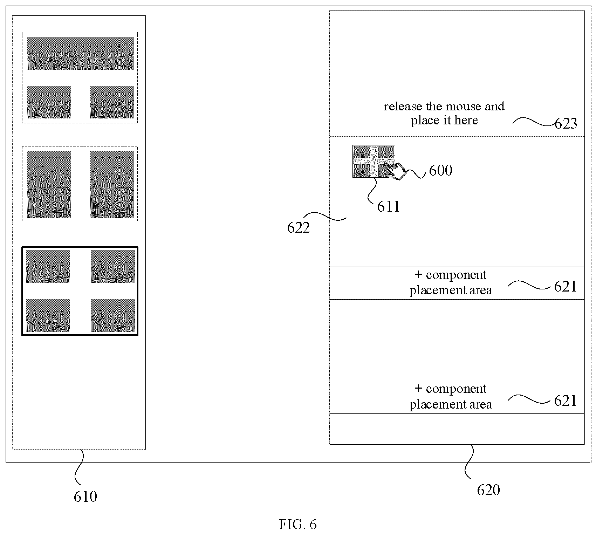

Exemplary, in an interface diagram as shown in FIG. 6, the target component 611 follows the trigger object 600 to arrive at the component area 622 in the target interface 620 and is located in the upper half of the component area 622, then a candidate placement area, which is above the component area 622 and closest to the center point of the component area 622, can be determined as the target placement area, and the first prompt information 621 displayed in the candidate placement area is replaced with the second prompt information 623, while the first prompt information 621 in other candidate placement areas do not change. The second prompt information 623 may specifically be "release the mouse and place it here". That is, the second prompt information may further include an interactive action for placing the target component in the target placement area, so as to prompt the user how to complete the placement of the target component, thereby reducing the difficulty of operation and improving the operating efficiency.

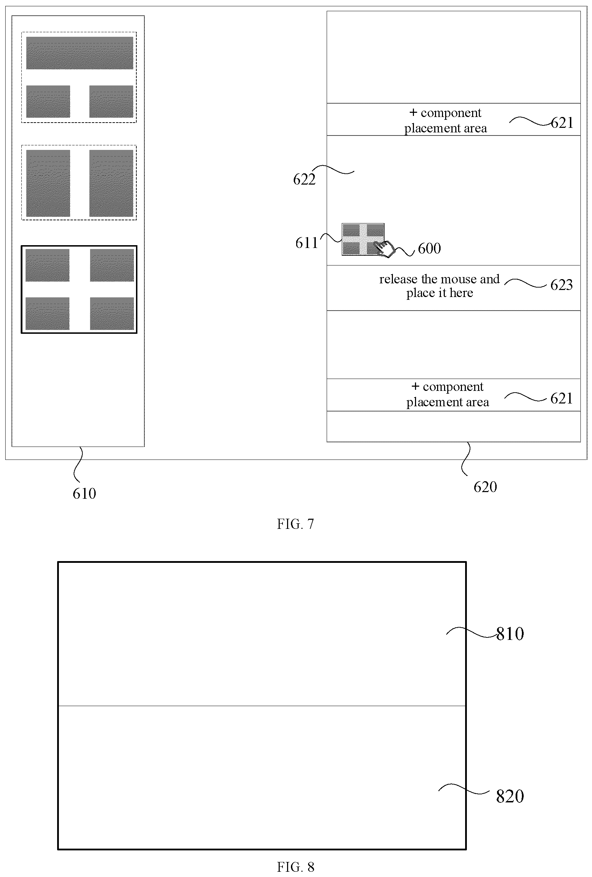

Exemplary, in an interface diagram as shown in FIG. 7, wherein the target component 611 follows the trigger object 600 to arrive at the component area 622 in the target interface 620 and is located in the lower half of the component area 622, then the candidate placement area, which is below the component area 622 and closest to the center point of the component area 622, can be determined as the target placement area, and the first prompt information 621 displayed in the candidate placement area can be replaced with the second prompt information 623, while the first prompt information 621 in other candidate placement areas do not change. The second prompt information 623 may specifically be "release the mouse and place it here".

Optionally, if the candidate placement area is an area set in the target interface, if it is detected that the target component enters the target interface, displaying a second prompt message in the target interface, may include: if it is detected that the target component enters the target interface, controlling the first prompt message displayed in the candidate placement area of the target interface to be replaced with the second prompt message.

Furthermore, after replacing the first prompt information with the second prompt information, the method may further include: in response to a component placement confirmation operation, controlling the target component to be placed in the target placement area. Among them, the component placement confirmation operation can specifically be an operation of releasing the mouse, that is, the target component does not need to be dragged to the target placement area very accurately to achieve the placement of the target component, but within a certain range from the target placement area, the target component can be placed in the target placement area by releasing the mouse, which reduces the difficulty of operation and is beneficial to improve operating efficiency.

In some optional embodiments, the component area where the target component is located includes multiple sub-areas, and determining the target placement area from the candidate placement areas based on the position includes: determining a target sub-area corresponding to the target position, the target sub-area being one of the multiple sub-areas; determining a candidate placement area corresponding to the target sub-area; and determining the candidate placement area corresponding to the target sub-area as the target placement area.

Exemplarily, as shown in a schematic diagram of a component area in FIG. 8, the component area includes two sub-areas, namely a first sub-area 810 and a second sub-area 820, if it is detected that the target position of the trigger object in the component area falls in the first sub-area 810, the first sub-area 810 is determined as the target sub-area corresponding to the target position; if it is detected that the target position of the trigger object in the component area falls in the second sub-area 820, the second sub-area 820 is determined as the target sub-area corresponding to the target position. A candidate placement area corresponding to the target sub-area can be further determined.

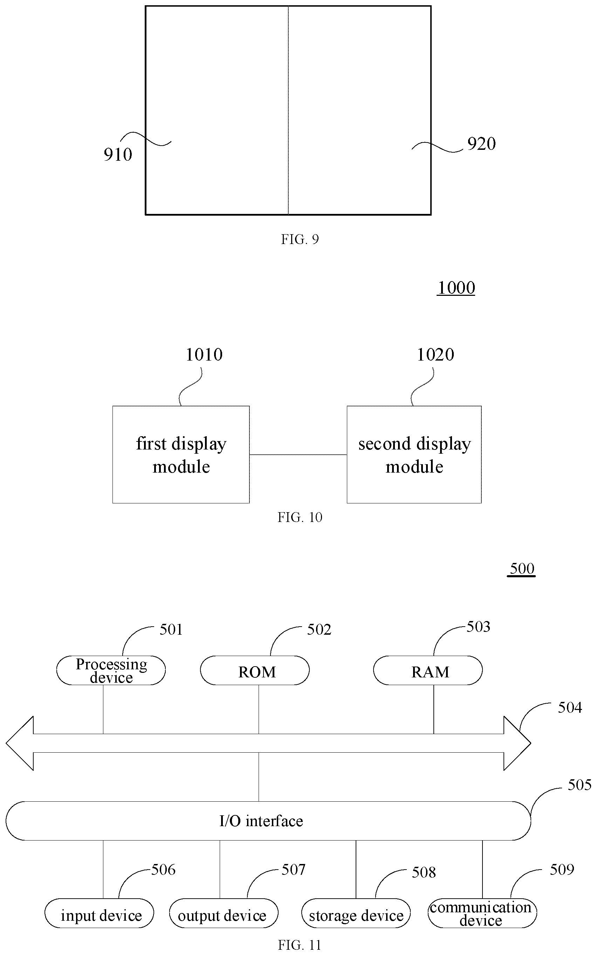

Optionally, as shown in a schematic diagram of a component area in FIG. 9, the component area includes two sub-areas, namely a first sub-area 910 and a second sub-area 920, if it is detected that the target position of the trigger object in the component area falls in the first sub-area 910, the first sub-area 910 is determined as the target sub-area corresponding to the target position; if it is detected that the target position of the trigger object in the component area falls in the second sub-area 920, the second sub-area 920 is determined as the target sub-area corresponding to the target position. A candidate placement area corresponding to the target sub-area can be further determined.

Optionally, determining a candidate placement area corresponding to the target sub-area includes:
determining a directional relationship between the target sub-area and the center point of the component area; wherein the directional relationship reflects a target direction of the center point of the component area pointing to the target sub-area; and using a candidate placement area closest to the center point of the component area in the target direction as the candidate placement area corresponding to the target sub-area.

The component area includes two sub-areas; the using a candidate placement area closest to the center point of the component area in the target direction as the candidate placement area corresponding to the target sub-area, may include: if the target sub-area is a sub-area pointed to by the center point of the component area in a first direction, using a candidate placement area in the first direction pointed to by the center point of the component area and closest to the center point of the component area as the candidate placement area corresponding to the target sub-area; if the target sub-area is a sub-area pointed to by the center point of the component area in a second direction, using a candidate placement area in the second direction pointed to by the center point of the component area and closest to the center point of the component area as the candidate placement area corresponding to the target sub-area; wherein the first direction is the opposite direction of the second direction.

In general, if the target sub-area is the upper half of a component area (such as sub-area 810 in FIG. 8), a candidate placement area, which is above the component area and closest to the center point of the component area, can be determined as the candidate placement area corresponding to the target sub-area; if the target sub-area is the lower half of a component area (such as sub-area 820 in FIG. 8), a candidate placement area, which is below the component area and closest to the center point of the component area, can be determined as the candidate placement area corresponding to the target sub-area.

Similarly, if the target sub-area is the left half of a component area (such as sub-area 910 in FIG. 9), the candidate placement area, which is on the left of the component area and closest to the center point of the component area, can be determined as the candidate placement area corresponding to the target sub-area; if the target sub-area is the right half of a component area (such as sub-area 920 in FIG. 9), the candidate placement area, which is on the right of the component area and closest to the center point of the component area, can be determined as the candidate placement area corresponding to the target sub-area.

Furthermore, the component area may be evenly divided into more (greater than 2) sub-areas, and a candidate placement area closest to the target sub-area according to the position of the target sub-area can be used as the candidate placement area corresponding to the target sub-area.

The information display method provided by embodiments of the present disclosure displays first prompt information on a target interface in response to a trigger operation on a target component, wherein the first prompt information is used to indicate a candidate placement area on the target interface that meets a condition for placing the target component, so that once the target component is triggered, the user can be indicated the candidate placement area where the target component can be located, therefore, the user can clearly understand where to place the target component, for guiding the user's next interactive operation, which can enhance the efficiency of editing the target interface and lowering the requirement for the user's operating level; when it is detected that the target component enters the target interface, further display second prompt information on the target interface, wherein the second prompt information is used to indicate a target placement area for placing the target component, and the target placement area is included in the candidate placement area, that is, when the target component enters the target interface, a target placement area is automatically determined from multiple candidate placement areas and prompted to the user, which further reduces the difficulty of operation and improves the operating efficiency and operating experience.

FIG. 10 is a structural schematic diagram of an information display apparatus in an embodiment of the present disclosure. The information display apparatus 1000 may specifically include:
a first display module 1010, configured to, in response to a trigger operation on a target component, display first prompt information on a target interface, wherein the first prompt information is used to indicate a candidate placement area on the target interface that meets a condition for placing the target component;
a second display module 1020, configured to, if it is detected that the target component enters the target interface, display second prompt information on the target interface, wherein the second prompt information is used to indicate a target placement area for placing the target component, and the target placement area is included in the candidate placement area.

Optionally, the target interface may include a page editing interface, and the target component is a component used to edit the contents presented by the page editing interface.

Optionally, the first display module 1010 is specifically configured to: in response to a trigger operation on the target component, control the movement of the target component; if the target component moves out of the component interface and does not enter the target interface, display a first prompt message in the candidate placement area in the target interface; wherein the trigger operation is input by a preset trigger object, and the trigger object includes one of a mouse pointer, a stylus, or a touch part.

Optionally, the second display module 1020 may include: a first determination unit, configured to determine the target position of the trigger object in a component area in the target interface if it is detected that the target component is located in the component area; a second determination unit, configured to determine the target placement area from the candidate placement areas based on the target position; and a display unit, configured to replace the first prompt information displayed in the target placement area with the second prompt information.

Optionally, the component area may include multiple sub-areas, and the second determination unit may include: a first determination sub-unit, configured to determine a target sub-area corresponding to the target position, the target sub-area being one of the multiple sub-areas; a second determination sub-unit, configured to determine a candidate placement area corresponding to the target sub-area; and a third determination sub-unit, configured to determine the candidate placement area corresponding to the target sub-area as the target placement area.

Optionally, the second determination sub-unit is specifically configured to: determine a directional relationship between the target sub-area and the center point of the component area; wherein the directional relationship reflects a target direction of the center point of the component area pointing to the target sub-area; and use a candidate placement area closest to the center point of the component area in the target direction as the candidate placement area corresponding to the target sub-area.

Optionally, the second determination sub-unit is specifically configured to: if the target sub-area is a sub-area pointed to by the center point of the component area in a first direction, use a candidate placement area in the first direction pointed to by the center point of the component area and closest to the center point of the component area as the candidate placement area corresponding to the target sub-area; if the target sub-area is a sub-area pointed to by the center point of the component area in a second direction, use a candidate placement area in the second direction pointed to by the center point of the component area and closest to the center point of the component area as the candidate placement area corresponding to the target sub-area; wherein the first direction is the opposite direction of the second direction.

Optionally, the apparatus further includes: a control module configured to: after replacing the first prompt information with the second prompt information, in response to a component placement confirmation operation, control the target component to be placed in the target placement area.

Optionally, the candidate placement area is a set area in the target interface, and the second display module 1020 is specifically configured to: if it is detected that the target component enters the target interface, control the first prompt information displayed in the candidate placement area of the target interface to be replaced with the second prompt information.

Optionally, the candidate placement area is an area between boundaries of existing component areas in the target interface.

The information display apparatus provided in the embodiments of the present disclosure can execute the steps in the information display method provided in the method embodiments of the present disclosure, and the execution steps and beneficial effects are no longer repeated here.

FIG. 11 is a schematic structural diagram of an electronic device. Hereinafter specifically referring to FIG. 11, which illustrates the schematic structural diagram applicable to implement electronic device 500 in the embodiments of the present disclosure. The electronic devices 500 in the embodiments of the present disclosure may include, but not limited to, mobile terminals such as mobile phones, notebook computers, digital broadcast receivers, PDAs (personal digital assistants), PAD (tablet computers), PMP (portable multimedia players), vehicle-mounted terminals (for example, vehicle-mounted navigation terminals), etc., and fixed terminals such as digital TVs, desktop computers, and the like. The electronic device shown in Fig. 11 is only an example, and should not impose any restriction on the functions and application scopes of the embodiments of the present disclosure.

As shown in FIG. 11, the electronic device 500 can include a processing apparatus (such as a central processing unit, a graphics processor, etc.) 501, which can perform various appropriate actions and processes according to a program stored in a Read Only Memory (ROM) 502 or a program loaded into a Random Access Memory (RAM) 503 from a storage device 508. In the RAM 503, various programs and data required for the operation of the electronic device 500 are also stored. The processing device 501, ROM 502 and RAM 503 are connected to each other through a bus 504. An input/output (I/O) interface 505 is also connected to the bus 504.

Generally, the following devices can be connected to the I/O interface 505: an input device 506 including, for example, touch screen, touch pad, keyboard, mouse, camera, microphone, accelerometer, gyroscope, etc.; an output device 507 such as Liquid Crystal Display (LCD), speakers, vibrators, etc.; a storage device 508 including a magnetic tape, a hard disk, etc.; and a communication device 509. The communication device 509 may allow the electronic device 500 to communicate with other devices wirelessly or in wired so as to exchange data. Although Fig. 11 shows an electronic device 500 with various devices, it should be understood that it is not required to implement or have all the devices shown. More or fewer devices may alternatively be implemented or provided.

Particularly, according to embodiments of the present disclosure, the process described above with reference to the flowchart can be implemented as a computer software program. For example, an embodiment of the present disclosure includes a computer program product including a computer program carried on a computer readable medium, the computer program containing program code for executing the method shown in the flowchart. In such an embodiment, the computer program can be downloaded and installed from the network through the communication device 509, or installed from the storage device 508 or from the ROM 502. When executed by the processing device 501, the computer program carries out the above-mentioned functions defined in the method of the embodiment of the present disclosure.

It should be noted that the above-mentioned computer-readable medium in this disclosure can be a computer-readable signal medium or a computer-readable storage medium or any combination of the two. The computer-readable storage medium can be, for example, but not limited to, an electrical, magnetic, optical, electromagnetic, infrared, or semiconductor system, device or equipment, or any combination of the above. More specific examples of computer-readable storage media may include, but not limited to, an electrical connection with one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium can be any tangible medium that contains or stores a program that can be used by or in combination with an instruction execution system, device, or equipment. In the present disclosure, the computer-readable signal medium may include a data signal propagated in baseband or as a part of a carrier wave, in which computer-readable program code is carried. This propagated data signal can take many forms, including, but not limited to, electromagnetic signals, optical signals, or any suitable combination of the above. The computer-readable signal medium can also be any computer-readable medium other than the computer-readable storage medium, which can send, propagate, or transmit the program for use by or in connection with the instruction execution system, apparatus, or device. The program code contained in the computer-readable medium can be transmitted by any suitable medium, including but not limited to electric wire, optical cable, RF (radio frequency), etc., or any suitable combination of the above.

In some embodiments, the client and the server can communicate by using any currently known or future developed network protocol such as HTTP (HyperText Transfer Protocol), and can be interconnected with any form or medium of digital data communication (e.g., communication network). Examples of communication networks include a local area network ("LAN"), a wide area network ("WAN"), an internet network (e.g., the Internet) and end-to-end network (e.g., ad hoc end-to-end network), as well as any currently known or future developed networks.

The above-mentioned computer-readable medium may be included in the electronic device; or it can exist alone without being loaded into the electronic device.

The above-mentioned computer-readable medium carries one or more programs, the above-mentioned one or more programs, when executed by the electronic device, cause the electronic device to: in response to a trigger operation on a target component, display first prompt information on a target interface, wherein the first prompt information is used to indicate a candidate placement area on the target interface that meets a condition for placing the target component; and if it is detected that the target component enters the target interface, display second prompt information on the target interface, wherein the second prompt information is used to indicate a target placement area for placing the target component, and the target placement area is included in the candidate placement area.

Optionally, when the above one or more programs are executed by the electronic device, the electronic device may also execute other steps described in the above embodiments.

Computer program codes for performing the operations of the present disclosure can be written in one or more programming languages or a combination thereof, including object-oriented programming languages such as Java, Smalltalk, and C++, as well as conventional procedural programming languages such as "C" language or similar programming languages. The program codes can be completely executed on the user's computer, partially executed on the user's computer, executed as an independent software package, partially executed on the user's computer, and partially executed on the remote computer, or completely executed on the remote computer or server. In a case related to remote computers, the remote computers can be connected to the user computers through any kind of networks, including Local Area Network (LAN) or Wide Area Network (WAN), or can be connected to external computers (for example, through the Internet with Internet service providers).

The flowcharts and block diagrams in the drawings illustrate the architecture, functions, and operations of possible embodiments of systems, methods, and computer program products according to various embodiments of the present disclosure. In this regard, each block in the flowchart or block diagram may represent a module, a program segment, or a part of the code, which contains one or more executable instructions for implementing specified logical functions. It should also be noted that in some alternative implementations, the functions labeled in the blocks may also occur in a different order than those labeled in the drawings. For example, two blocks shown in succession can actually be executed substantially in parallel, and sometimes they can be executed in the reverse order, depending on the functions involved. It should also be noted that each block in the block diagram and/or flowchart, and the combination of blocks in the block diagram and/or flowchart, can be realized by a dedicated hardware-based system that performs specified functions or operations, or can be realized by a combination of dedicated hardware and computer instructions.

The units described in the embodiments of this disclosure can be realized by software or hardware. In some cases, the name of the unit does not limit the module itself.

The functions described above herein can be at least partially performed by one or more hardware logic components. For example, without limitation, exemplary types of hardware logic components that can be used may include: field programmable gate array (FPGA), application specific integrated circuit (ASIC), application specific standard product (ASSP), system on chip (SOC), complex programmable logic device (CPLD) and so on.

In the context of the present disclosure, a machine-readable medium can be a tangible medium that can contain or store a program for use by or in connection with an instruction execution system, apparatus, or device. The machine-readable medium can be a machine-readable signal medium or a machine-readable storage medium. The machine-readable medium may include, but not limited to, electronic, magnetic, optical, electromagnetic, infrared, or semiconductor systems, devices or equipment, or any suitable combination of the foregoing. More specific examples of machine-readable storage medium may include electrical connections based on one or more wires, portable computer disks, hard disks, random access memories (RAM), read-only memories (ROM), erasable programmable read-only memories (EPROM or flash memories), optical fibers, compact disk read-only memories (CD-ROMs), optical storage devices, magnetic storage devices, or any suitable combination of the above.

According to one or more embodiments of the present disclosure, the present disclosure provides an information display method, comprising: in response to a trigger operation on a target component, displaying first prompt information on a target interface, wherein the first prompt information is used to indicate a candidate placement area on the target interface that meets a condition for placing the target component; if it is detected that the target component enters the target interface, displaying second prompt information on the target interface, wherein the second prompt information is used to indicate a target placement area for placing the target component, and the target placement area is included in the candidate placement area.

According to one or more embodiments of the present disclosure, in the information displaying method provided by the present disclosure, optionally, the target interface may include a page editing interface, and the target component is a component used to edit the contents presented by the page editing interface.

According to one or more embodiments of the present disclosure, in the information displaying method provided by the present disclosure, optionally, in response to a trigger operation on a target component, displaying first prompt information on a target interface, may include: in response to a trigger operation on the target component, controlling the movement of the target component; if the target component moves out of the component interface and does not enter the target interface, displaying a first prompt message in the candidate placement area in the target interface; wherein the trigger operation is input by a preset trigger object, and the trigger object includes one of a mouse pointer, a stylus, or a touch part.

According to one or more embodiments of the present disclosure, in the information displaying method provided by the present disclosure, optionally, if it is detected that the target component enters the target interface, displaying second prompt information on the target interface, may include: determining the target position of the trigger object in a component area in the target interface if it is detected that the target component is located in the component area; determining the target placement area from the candidate placement areas based on the target position; and replacing the first prompt information displayed in the target placement area with the second prompt information.

According to one or more embodiments of the present disclosure, in the information displaying method provided by the present disclosure, optionally, the component area may include multiple sub-areas, and the determining the target placement area from the candidate placement areas based on the target position, may include: determining a target sub-area corresponding to the target position, the target sub-area being one of the multiple sub-areas; determining a candidate placement area corresponding to the target sub-area; and determining the candidate placement area corresponding to the target sub-area as the target placement area.

According to one or more embodiments of the present disclosure, in the information displaying method provided by the present disclosure, optionally, the determining a candidate placement area corresponding to the target sub-area may include: determining a directional relationship between the target sub-area and the center point of the component area; wherein the directional relationship reflects a target direction of the center point of the component area pointing to the target sub-area; and using a candidate placement area closest to the center point of the component area in the target direction as the candidate placement area corresponding to the target sub-area.

According to one or more embodiments of the present disclosure, in the information displaying method provided by the present disclosure, optionally, the component area includes two sub-areas, and the using a candidate placement area closest to the center point of the component area in the target direction as the candidate placement area corresponding to the target sub-area, may include: if the target sub-area is a sub-area pointed to by the center point of the component area in a first direction, using a candidate placement area in the first direction pointed to by the center point of the component area and closest to the center point of the component area as the candidate placement area corresponding to the target sub-area; if the target sub-area is a sub-area pointed to by the center point of the component area in a second direction, using a candidate placement area in the second direction pointed to by the center point of the component area and closest to the center point of the component area as the candidate placement area corresponding to the target sub-area; wherein the first direction is the opposite direction of the second direction.

According to one or more embodiments of the present disclosure, in the information displaying method provided by the present disclosure, optionally, after replacing the first prompt information displayed in the target placement area with the second prompt information, the method further includes: in response to a component placement confirmation operation, controlling the target component to be placed in the target placement area.

According to one or more embodiments of the present disclosure, in the information displaying method provided by the present disclosure, optionally, the candidate placement area is a set area in the target interface, and if it is detected that the target component enters the target interface, displaying second prompt information on the target interface, may include: if it is detected that the target component enters the target interface, controlling the first prompt information displayed in the candidate placement area of the target interface to be replaced with the second prompt information.

According to one or more embodiments of the present disclosure, in the information displaying method provided by the present disclosure, optionally, the candidate placement area is an area between boundaries of existing component areas in the target interface.

According to one or more embodiments of the present disclosure, the present disclosure provides an information display apparatus, comprising: a first display module configured to, in response to a trigger operation on a target component, display first prompt information on a target interface, wherein the first prompt information is used to indicate a candidate placement area on the target interface that meets a condition for placing the target component; and a second display module configured to, if it is detected that the target component enters the target interface, display second prompt information on the target interface, wherein the second prompt information is used to indicate a target placement area for placing the target component, and the target placement area is included in the candidate placement area.

According to one or more embodiments of the present disclosure, the present disclosure provides an electronic device, including:
one or more processors;
a memory for storing one or more programs;
wherein the one or more programs, when executed by the one or more processors, cause the one or more processors to implement the information display method as provided in the present disclosure.

According to one or more embodiments of the present disclosure, the present disclosure provides a computer-readable storage medium on which a computer program is stored, wherein the computer program, when executed by a processor, causes implementation of the information display method as provided in the present disclosure.

According to one or more embodiments of the present disclosure, the present disclosure provides a computer program product, which may include a computer program or instructions, wherein the computer program or instructions, when executed by a processor, causes implementation of the information display method as provided in the present disclosure.

The above description is only a preferred embodiment of the present disclosure and an illustration of the applied technical principles. Those skilled in the art should understand that the scope of the disclosure involved in this disclosure is not limited to the technical solutions formed by the specific combination of the above technical features, but also covers the technical solutions formed by the above technical features or Other technical solutions formed by any combination of equivalent features. For example, a technical solution formed by replacing the above-mentioned features with (but not limited to) technical features with similar functions disclosed in this disclosure.

In addition, while operations are depicted in a particular order, this should not be understood as requiring that the operations be performed in the particular order shown or to be performed in sequential order. Under certain circumstances, multitasking and parallel processing may be advantageous. Likewise, while the above discussion contains several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. An information display method, comprising:
in response to a trigger operation on a target component, displaying first prompt information on a target interface, wherein the first prompt information is used to indicate a candidate placement area on the target interface that meets a condition for placing the target component; and
if it is detected that the target component enters the target interface, displaying second prompt information on the target interface, wherein the second prompt information is used to indicate a target placement area for placing the target component, and the target placement area is included in the candidate placement area.

2. The method of claim 1, wherein, the target interface comprises a page editing interface, and the target component is a component used to edit the contents presented by the page editing interface.

3. The method of claim 1 or 2, wherein, in response to a trigger operation on a target component, displaying first prompt information on a target interface, comprises:
in response to a trigger operation on the target component, controlling the movement of the target component;
if the target component moves out of the component interface and does not enter the target interface, displaying a first prompt message in the candidate placement area in the target interface;
wherein the trigger operation is input by a preset trigger object, and the trigger object comprises one of a mouse pointer, a stylus, or a touch part.

4. The method of claim 3, wherein, if it is detected that the target component enters the target interface, displaying second prompt information on the target interface, comprises:
determining the target position of the trigger object in a component area in the target interface if it is detected that the target component is located in the component area;
determining the target placement area from the candidate placement areas based on the target position; and
replacing the first prompt information displayed in the target placement area with the second prompt information.

5. The method of claim 4, wherein, the component area may include multiple sub-areas, and the determining the target placement area from the candidate placement areas based on the target position, comprises:
determining a target sub-area corresponding to the target position, the target sub-area being one of the multiple sub-areas;
determining a candidate placement area corresponding to the target sub-area; and
determining the candidate placement area corresponding to the target sub-area as the target placement area.

6. The method of claim 5, wherein, the determining a candidate placement area corresponding to the target sub-area comprises:
determining a directional relationship between the target sub-area and the center point of the component area; wherein the directional relationship reflects a target direction of the center point of the component area pointing to the target sub-area; and
using a candidate placement area closest to the center point of the component area in the target direction as the candidate placement area corresponding to the target sub-area.

7. The method of claim 6, wherein, the component area includes two sub-areas, and the using a candidate placement area closest to the center point of the component area in the target direction as the candidate placement area corresponding to the target sub-area, comprises:
if the target sub-area is a sub-area pointed to by the center point of the component area in a first direction, using a candidate placement area in the first direction pointed to by the center point of the component area and closest to the center point of the component area as the candidate placement area corresponding to the target sub-area;
if the target sub-area is a sub-area pointed to by the center point of the component area in a second direction, using a candidate placement area in the second direction pointed to by the center point of the component area and closest to the center point of the component area as the candidate placement area corresponding to the target sub-area;
wherein the first direction is the opposite direction of the second direction.

8. The method of any one of claims 5-7, wherein, after replacing the first prompt information displayed in the target placement area with the second prompt information, the method further includes:
in response to a component placement confirmation operation, controlling the target component to be placed in the target placement area.

9. The method of any one of claims 3-8, wherein, the candidate placement area is a set area in the target interface, and if it is detected that the target component enters the target interface, displaying second prompt information on the target interface, comprises:
if it is detected that the target component enters the target interface, controlling the first prompt information displayed in the candidate placement area of the target interface to be replaced with the second prompt information.

10. The method of any one of claims 1-9, wherein, the candidate placement area is an area between boundaries of existing component areas in the target interface.

11. The method of claim 10, wherein when the target interface does not include an existing component area, the top, bottom, left or right of the target interface is determined as a candidate placement area.

12. The method of claim 10, further comprising:
determining component areas with a style similar to the target component based on parameters of the target component and parameters of existing components in the target interface, and
determining positions between such component areas as candidate placement areas.

13. The method of claim 3, wherein the displaying the first prompt information in the candidate placement area in the target interface comprises:
only displaying the first prompt information about a specific text in the candidate placement area, or
changing the color of the candidate placement area while displaying the first prompt information of the specific text; or
only changing the color of the candidate placement area to express the first prompt information.

14. The method of claim 9, wherein the controlling the first prompt information displayed in the candidate placement area of the target interface to be replaced with the second prompt information comprises:
only displaying the second prompt information about a specific text in the candidate placement area, or
changing the color of the candidate placement area while displaying the second prompt information of the specific text; or
only changing the color of the candidate placement area to express the second prompt information.

15. An information display apparatus, comprising:
a first display module configured to, in response to a trigger operation on a target component, display first prompt information on a target interface, wherein the first prompt information is used to indicate a candidate placement area on the target interface that meets a condition for placing the target component; and
a second display module configured to, if it is detected that the target component enters the target interface, display second prompt information on the target interface, wherein the second prompt information is used to indicate a target placement area for placing the target component, and the target placement area is included in the candidate placement area.

16. An electronic device, comprising:
one or more processors;
a storage device configured to store one or more programs;
wherein the one or more programs, when executed by the one or more processors, cause the one or more processors to implement the method of any one of claims 1 to 14.

17. A computer-readable storage medium having a computer program stored thereon, wherein the program, when executed by a processor, causes implementation of the method of any one of claims 1 to 14.

18. A computer program product having a computer program stored thereon, wherein the computer program, when executed by a processor, causes implementation of the method of any one of claims 1 to 14.

19. A computer program comprising: instructions, which, when executed by a processor, cause the processor to perform the method of any one of claims 1 to 14.
